# EUROPEAN PATENT SPECIFICATION

(11) **EP 3 116 079 B1**
(45) Date of publication and mention of the grant of the patent: **25.09.2019**
(21) Application number: 16178013.5
(22) Date of filing: 05.07.2016
(51) Int. Cl.: H02G 3/30, H01R 25/14

(54) **MAGNETIC FIXING SYSTEM FOR AN ELECTRIFIED RAIL**
MAGNETISCHES BEFESTIGUNGSSYSTEM FÜR EINE ELEKTRIFIZIERTE SCHIENE
SYSTÈME DE FIXATION MAGNÉTIQUE POUR UN RAIL ÉLECTRIFIÉ

(30) Priority: 07.07.2015 IT UB20151917
(43) Date of publication of application: 11.01.2017
(73) Proprietor: CEFLA SOCIETA' COOPERATIVA, 40026 Imola (BO) (IT)
(72) Inventor: BONZI, GIANCARLO, 40026 Imola (BO) (IT)
(74) Representative: Karaghiosoff, Giorgio Alessandro

(56) References cited:
- EP-A1- 2 833 490
- WO-A1-2015/015187
- DE-B- 1 083 882
- JP-A- 2002 291 131
- US-A1- 2005 016 760
- US-A1- 2012 049 013
- US-A1- 2013 242 561

## Description

The present invention relates to the technical field of shopfitting for large scale retail, and in particular to a rail for electrifying shelving. More particularly, the invention relates to a rail provided with magnets, suitable for being releasably fixed to shelving.

Said electrified rail was described in detail in patent application EP2833490A1 of the same applicant; said document is here incorporated by reference. In short, said document describes a rail having a planar base (back portion) suitable for fixing to shelving, and a front part having a plurality of slots, each holding a metal conductor. The positioning of the metal conductors inside the slots is such as to at least expose part of the metal conductor; plugs can be plugged into said metal conductor in any position, said plugs supplying a plurality of electric/electronic devices: lamps for lighting the shelving, electric price tags, etc.

In the following, reference will be made to the front of the rail meaning the long side on which metal conductors are present, and which is available for plugging different plugs, and to the back of the rail meaning the long side, generally but not limitatively opposed to the front side, which is fixed to the shelving.

In its present version, the rail is fixed to the shelving through simple double-sided tape. This system has several problems, mainly that the double-sided tape remains glued to the shelving when the rail is removed, soiling the shelving. Moreover, in some cases, when tearing, the double-sided tape can damage the shelving coating in some points. Once detached, the double-sided tape loses the most of its adhesive properties, so that the repositioning of the rail, and therefore its reuse, is unstable.

Therefore a different fixing system was searched for, which is releasable and free from the above-quoted inconveniences. Said system was found in the use of magnets having a high magnetic force, having the advantage that they fix strongly to the shelving, which are usually made of metal. Nonetheless, this system is not free of problems, too.

In fact, when the shelvings are mounted, often holes must be pierced in them through drills or hacksaws. This generates metal shavings and powder, which are attracted by the magnets positioned on the back of the rail: the metallic powder, attracted by magnets, forms a layer of metallic powder over the metallic conductors, potentially generating a short circuit, or anyway an abnormal closing of the circuit. This entails, after each working, the constant attention of the people mounting the shelvings to accurately clean the remains of the working on the rails, which is a delicate task.

If the cleaning is not accurate, although the power supplies have several levels of protection against short-circuits, the metallic remains can overheat, generating dangerous conditions. Experimentally it was found that the higher the magnetic force, the more effective the force of the fixing of the rail to the shelving, but at the same time the higher the related dangers, too.

This solution, interesting in theory, seemed not workable, even if the magnetic solution showed the best prerequisites, in that it needs neither special tools, nor holes on the shelving, and is totally repositionable and usable also on already set-up shelvings to retrofit them. The solution of the problem is made more difficult by the position of rails on the shelving, as rails are often positioned vertically, i.e. in a position more prone to intercept and gather cut remains falling from above. The typical position used on the market, i.e. rails positioned horizontally, with the uncovered conductors facing the floor, would have rendered the problem easier.

Experimentally, the first possible solution used magnetic clips having small dimensions (about 20x15 mm) comprising magnets having high magnetic force. Taking into account the weight which has to be supported by the rail, indicatively four magnetic clips were necessary for each linear meter of rail, for an overall magnetic force of about 100 N for each linear meter of rail. Halving this value, the magnetic attraction of the rail to the shelving becomes poor, without eliminating the problem of the attraction of metallic powder on the front of the rail where conductors are uncovered.

Document WO2015015187 discloses a shelf power distribution apparatus comprises a track element further comprising a first electrical conductor and a first magnet; wherein said first magnet facilitates the attachment of said track element to a shelf; a first cover element that further comprises a second magnet; and wherein said second magnet facilitates the attachment of said cover to said track element.

Document JP2002291131 discloses a cable protector and pedestal therefor in which cable protector comprises a pedestal and a cable cover. Fixing members fixing cables and coupling members with which the cable cover is coupled with the pedestal are formed on the pedestal. Cables are removably fixed to the pedestal with the fixing members. The cable cover is coupled with the pedestal with the coupling members formed on the pedestal. The coupling members are formed near both ends of the pedestal. By holding the coupling members between both tips of the cable cover from the outsides of the coupling member on both sides of the pedestal, the cable cover is coupled with the pedestal.

Aim of the present invention is providing a releasable fixing system of the rail to the metallic shelving, not soiling the shelving, allowing the detachment, the re-fixing and the free positioning of the rail, free from problems related to electrical safety, highly miniaturized and which is cheap and easy to manufacture.

This object is achieved by an apparatus and a method having the features of the independent claims. Advantageous embodiment and refinements are specified in the claims dependent thereon.

The solution consists in distributing the magnetic force along at least a relevant part or the whole length of the rail: in this way, there is always a minimal magnetic attraction of the rail along the whole shelf, without the collateral effect of attracting metallic powder on the rail front. As the magnetic force is locally distributed, relocating the rail is easy: this is a problem, particularly at the two ends of the rail, which are the rail areas more prone to bumps and jerks. Therefore, the refinement of the solution consists in using, in combination with said distributed magnetic force, also two permanent magnets provided with high magnetic force, insulating them on the front the metallic conductors.

Although the magnetic fixture according to the present invention is disclosed in relation to an electrified rail and in combination with a metallic shelving, the same technical concept can be applied in equivalent solutions in which different kinds of peripheral devices are attached to the shelving, including LED lamps for promoting the growth of plants.

Further advantages and properties of the present invention are subject matter of the dependent claims and/or are disclosed in the following description, in which exemplary embodiments of the present invention are explained in detail based on the drawings:
- Figure 1: Axonometric view of a shelving with an electrified rail according to the present invention;
- Figure 2: Axonometric view of a detail of Figure 1, showing the rail according to the present invention vertically fixed to the back panelling of the shelving;
- Figure 3: Axonometric view of an electrified rail according to the present invention;
- Figure 4: Axonometric view of two serially connected rails;
- Figure 5: Axonometric view of a terminal top for a rail.

In the following description and in the introduction to the description and in the claims, the term magnetic force exercised by a magnet means the magnetic attraction force or repulsion force exercised by a magnet due to the intensity of the magnetic field generated by said magnet. Since the magnetic force exercised by a magnet on ferromagnetic material depends inter alia form the strength of the magnetic field or from the intensity of the magnetic field and this is a function of the magnetic flux generated by the magnet, there is a direct and parametrical relation between field strength or intensity and magnetic force exercised on a body by the said field. Thus it is clear that the terms like magnetic force strength and magnetic field intensity are related to one another.

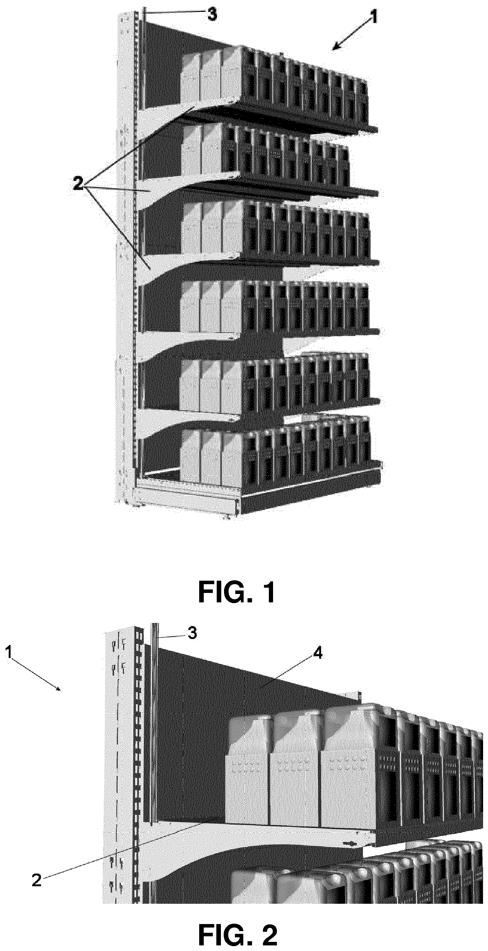

Figure 1 shows a shelving 1 for points of sale comprising a plurality of shelves 2 supporting the rail 3 according to the present invention.

Figure 2 shows a detail of shelving 1: here a rail 3 vertically fixed to the back panelling 4 of shelving 1 thanks to the magnets according to the present invention is more easily visible.

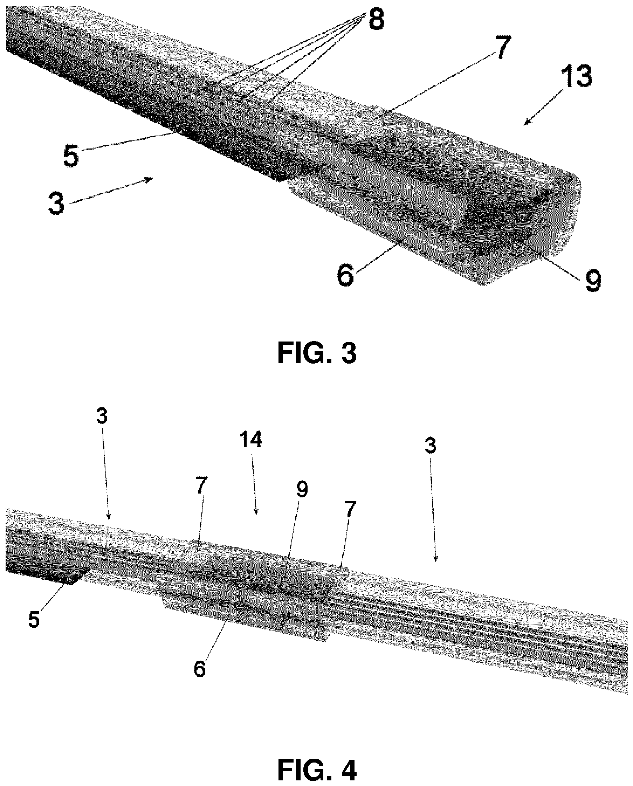

As shown in Figure 3, on the base (back part) of the rail 3 a magnetic band 5 having low magnetic force is fixed for the whole length of the rail. Said magnet is absent at the two ends of the rail 3, for a length of approximately 50 mm. At the two ends, wherein the low force magnet is absent, two magnetic clips 13 are instead present, ensuring the grip of the rail to the shelving.

The magnetic clip 13 comprises an insulating adhesive 9 on its front, and a magnet having high magnetic force positioned on the back of the rail 3, all enclosed in an insulating plastic protection 7 which is steadily fixed to the rail and can be removed with a tool. The plastic protection 7 and the electrical insulation cooperate with the aim of preventing that metallic powder adheres to conductors 8.

As already anticipated, the high force magnet 6, having a magnetic force higher than 10 N/cm2, cannot be used near to the non-insulated conductors 8, otherwise the magnetic force, having the good property of fixing to the metallic back panelling on its back, introduces the bad property of attracting metallic powders on the front, where non-insulated conductors 8 are present., However, the high force magnet 6 is necessary because without it the rail does not stay in the desired position and is easily removed. Therefore, the high force magnet 6 must be used only in areas where the conductors 8 are absent or are insulated. As a consequence, the high force magnet 6 does not entail the risk of attracting metallic powders where non-insulated conductors are present.

The magnet 6 with high magnetic force is not sufficient to ensure a good grip of the rail 3 to back panelling 4, in that in the centre of the rail 3, where freedom of electric contact is needed, said rail would be easily moved or removed from contact with shelving 1 when working on the electric plugging of peripheral devices.

The problem is solved through the use of a magnetic band with distributed magnetic force, which overall has a magnetic force towards the back panelling in the order of 80 N/linear meter of rail, but in the particular exerts a magnetic force lower than 1 N for each linear centimetre of rail. Said magnetic band 5 with distributed force is fixed in a steady way on the back of the rail 3, e.g. through glue or screws.

This means that the magnetic force of the magnetic band 5 is significant over the length of a metre of rail, but is very small if considered on a small number of centimetres. As the magnetic band is positioned on the base of the rail 3, and the rail has the conductors at about 3 mm of distance, the magnetic force on the conductors' side is negligible and not sufficient to attract metal powder.

The combination of two magnetic clips 13 with high magnetic force and of a band 5 with distributed force allows to obtain a fixing system which is strong enough, but at the same time safe, in that it does not attract metal powder over the uncovered conductors 8. From the above description, it is clear that the use of the magnets 6 with high magnetic force only, or of the magnetic band with distributed magnetic force only would not obtain the desired aim.

In this way, the rail can be easily positioned in any desired position. Moreover, this fixing system allows to fix the electrified rail as a retrofit on any kind of metallic shelving, even already set up in a point of sale, and optionally even if the shelving is already supporting goods.

The weight of the peripheral devices supplied by the conductors 8 can be such that the rail 3 tends to detach from shelving 1. In this case, one or more further magnetic clips 13 can be inserted in an intermediate point of the rail 3.

An alternative embodiment is the combination of a magnet 6 with high magnetic force, an insulation 9 on the front of the rail 3, and a protection 7 in insulating plastics to get the serial connection 14 of two rails 3. In this embodiment, shown in Figure 4, the magnet 6 with high magnetic force is placed over the two adjacent rails 3, while the plastic protection 7 and the insulation 9 extend for a length longer than the length of the magnet itself. It is worth noting that the connection between the conductors 8 belonging to two distinct rails 3 is made through a (not shown) electronic board suitable for contacting the conductors 8 of the first and of the second rail.

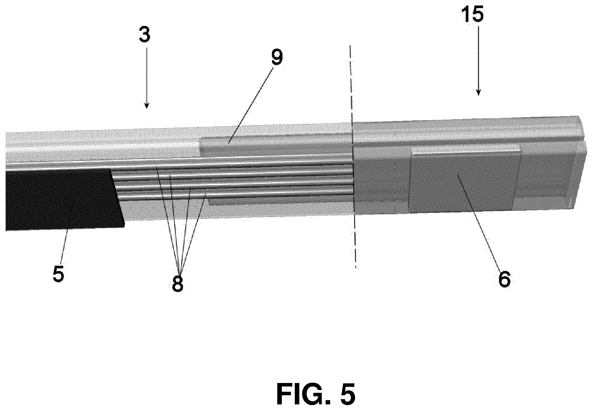

A further embodiment alternative to that shown in Figure 3 is inserting a top 15 in insulating plastics having on its back a magnet 6 with high magnetic force, in a point far from conductors 8. Said embodiment is shown in Figure 5. In this embodiment, the conductors 8 end at the beginning of top 15 itself. The end of conductors 8 is highlighted in Figure 5 by the dotted line. In this particular case, the insulation 9 extends from the end of top 15 up to some centimetre of the top towards the inside of the rail 3, i.e. beyond the dotted line, always with the aim of preventing as much as possible that conductors 8 can attract metal powder.
1 shelving
2 shelf
3 rail
4 back panelling
5 band with distributed magnetic force
6 magnet with high magnetic force
7 plastic protection
8 conductors
9 insulation
13 magnetic clip
14 connection between two rails
15 end top

## Claims

1. Magnetic fixing system comprising an electrified rail (3) and a metal shelving, particularly for the electrification of metal shelving (1) units provided on their front of electronic labels, displays and/or other peripheral devices, said shelving (1) comprising at least one shelf; said rail (3) comprising a body of electrically insulating plastic material, provided with longitudinal slots suitably distanced to each other, in every one of which metal conductor (8) is housed and can be reached by an electric contact useful to connect the same conductor to a plug or an electric or electronic device, fixed to said body of the rail (3),
said rail (3) further comprises magnetic fixing elements (5, 6) of the said rail to the metal shelving
**characterized in that**
- the said rail (3) is provided with two kinds of magnets (5, 6) which generate magnetic fields having a different intensity or magnetic flux, one (5) of the two kinds of magnets generating a magnetic field with a lower intensity than the other kind (6) of magnets:
- the magnets (5) generating the lower magnetic is configured to distributing the magnetic force along the length of the rail (3);
- the magnets (6) generating the magnetic field having the higher intensity are placed at the ends of the said rail (3) and are insulated from the metallic conductors (8) at the side of the rail (3) opposite to the side adhering the shelving (1);
- the magnet (5) generating the magnetic field with the lower or weaker intensity exercises an attraction force relatively to the metal shelving (1) which is lower than 1 N/cm2 and the magnets (6) generating the magnetic field having a higher intensity exercises an attraction force one the metal shelving (1) in the order of at least 10 N/cm2.

2. Magnetic fixing system according to claim 1, wherein the magnet (5) generating the magnetic field with the lower intensity has a length which is slightly shorter than the rail (3) itself.

3. Magnetic fixing system according to claim 1 or 2, wherein the magnet (6) generating the magnetic field with the higher intensity has a length of at least 20 mm.

4. Magnetic fixing system according to one or more of claims 1 to 3, wherein the magnet (6)) generating the magnetic field with the higher intensity, positioned on the back of the rail (3), is included inside a magnetic clip (13) comprising on the front side of the rail (3) an insulation (9), and a plastic protection (7) covering the four long sides of the rail (3).

5. Magnetic fixing system according to one or more of claims 1 to 4, wherein at least two magnetic clips (13) are positioned at the two ends of the rail (3) itself, and optionally at least a further magnetic clip (13) is placed between the two magnetic clips (13) placed at the two ends of the rail.

6. Magnetic fixing system according to one or more of the preceding claims **characterized in that** it forms a connecting element (14) between a first and a second sequentially positioned adjacent rails (3), the magnet (6) generating a magnetic field having an intensity to exercise a high magnetic attraction force, of at least 10 N/cm2 being placed over the said two rails (3), wherein the protection (7) and the insulation (9) extend for a length which is longer than the magnet (6) itself, and being provided an electronic board suitable for putting into contact the conductors (8) of said first and second rail (3).

7. Magnetic fixing system according to one or more of the preceding claims 1 to 5 **characterized in that** it comprises a terminal top (15) in plastic to be placed at an end of a rail (3), the said terminal top being associated to the magnet generating a magnetic field having an intensity to exercise a with high magnetic attraction force, of at least 10 N/cm2, placed on the back of the rail (3) itself, an insulation (9) placed on the front side of the rail (3) having a length which is longer than that of the top itself, and wherein the metallic conductors (8) end at the proximal end of the top, and are covered for a length similar to that of the top by an insulation (9) placed on the front of the rail (3).

8. Magnetic fixing system according to claim 1 or one or more of the claims 2 to 7, **characterized in that**
- said rail (3) comprising a body of electrically insulating plastic material, provided with longitudinal slots suitably distanced from each other, in every one of which a wire or strand (8) of electrically conducing metal is housed which wire or strand is surrounded for more than 180° of its section by the internal walls of the respective slot to be friction-held in it, so that for the remaining section the same wire or strand (8) is free and can be reached by an electric contact configured to connect the same conductor to a plug or an electric or electronic device, fixed to said body of the rail,
- wherein the body of the rail (3) itself is formed in a monolithic way and with any plastic material mechanically resistant, with a high degree of electric insulation and a high thermal resistance, and
- wherein said slots for holding the wires or strands (8) are positioned one beside the other, and after the surrounding and holding of the wires (8) the slots are open on a visible planar side of the rail body, with longitudinal mouths having a width always inferior to the diameter of the wires or strands (8);
- the depth of the slots being perpendicular to said visible side and having a value sufficient for wire (8) to be ditched and protected in the slots surrounding the wires or strands (8) for more than 180° of their section, the wires or strands (8) being held in slots by the toughness and structural non-deformability of the material forming the monolithic body of the rail itself, while through the narrow mouths of said slots every electric wire or strand can be reached by the spring-loaded contacts of plugs or of devices mounted on the monolithic body itself of the rail (3).

9. Method for releasably fixing to a shelving (1) for point of sales at least an electrified rail (3) in any direction and/or position, said method making use of the magnetic fixing system according to one of claims 1 to 8.

## Patentansprüche

1. Magnetisches Befestigungssystem mit einer elektrifizierten Schiene (3) und einem Metallregal, insbesondere zur Elektrifizierung von Metallregaleinheiten (1), die frontseitig mit elektronischen Etiketten, Displays und/oder anderen Peripheriegeräten versehen sind,
wobei das Regal (1) mindestens eine Regalablage umfasst,
wobei die Schiene (3) einen Körper aus elektrisch isolierendem Kunststoffmaterial aufweist, der mit zueinander passend beabstandeten Längsschlitzen versehen ist, in denen jeweils ein metallischer Leiter (8) untergebracht ist und von einem elektrischen Kontakt erreichbar ist, der geeignet ist, den selben Leiter mit einem Stecker oder einer elektrischen oder elektronischen Vorrichtung zu verbinden, die an dem Körper der Schiene (3) befestigt ist,
wobei die Schiene (3) ferner magnetische Befestigungselemente (5, 6) zur Befestigung der Schiene an dem Metallregal umfasst,
**dadurch gekennzeichnet, dass**
- die Schiene (3) mit zwei Arten von Magneten (5, 6) versehen ist, die Magnetfelder mit unterschiedlichem Intensität oder Magnetfluss erzeugen, wobei eine (5) der beiden Arten von Magneten ein Magnetfeld mit einer geringeren Intensität erzeugt als die andere Art (6) von Magneten;
- die das schwächere Magnetfeld erzeugenden Magnete (5) sind zur Verteilung
der Magnetkraft entlang der Länge der Schiene (3) ausgerichtet;
- die Magnete (6), die das Magnetfeld mit der höheren Intensität erzeugen, an den Enden der Schiene (3)angeordnet sind und gegenüber den metallischen Leitern (8) an jener Seite der Schiene (3) isoliert sind, welche der dem Regal (1) anhaftenden Seite gegenüberliegt;
- der das Magnetfeld mit der geringeren oder schwächeren Intensität erzeugende Magnet (5) eine Anziehungskraft relativ zum Metallregal (1) ausübt, die kleiner als 1 N/cm² ist und die Magnete (6), die das Magnetfeld mit einer höheren Intensität erzeugen, eine Anziehungskraft auf das Metallregal (1) in der Größenordnung von mindestens 10 N/cm² ausüben.

2. Magnetisches Befestigungssystem nach Anspruch 1, wobei der Magnet (5), der das Magnetfeld mit der geringeren Intensität erzeugt, eine Länge aufweist, die geringfügig kürzer ist als die Schiene (3) selbst.

3. Magnetisches Befestigungssystem nach Anspruch 1 oder 2, wobei der Magnet (6), der das Magnetfeldes mit der höheren Intensität erzeugt, eine Länge von mindestens 20 mm aufweist.

4. Magnetisches Befestigungssystem nach einem oder mehreren der Ansprüche 1 bis 3, wobei der Magnet (6), der das Magnetfeldes mit der höheren Intensität erzeugt und auf der Rückseite der Schiene (3) positioniert ist, innerhalb eines Magnetclips (13) aufgenommen ist, der an der Vorderseite der Schiene (3) eine Isolierung (9) und einen die vier Längsseiten der Schiene (3) abdeckenden Kunststoffschutz (7) aufweist.

5. Magnetisches Befestigungssystem nach einem oder mehreren der Ansprüche 1 bis 4, wobei mindestens zwei Magnetclips (13) an den beiden Enden der Schiene (3) positioniert sind und optional mindestens einen weiteren magnetischen Clip (13) zwischen den beiden Magnetclips (13) angeordnet ist, die an den beiden Enden der Schiene angeordnet sind.

6. Magnetisches Befestigungssystem nach einem oder mehreren der vorhergehenden Ansprüche, **dadurch gekennzeichnet, dass** es ein Verbindungselement (14) zwischen einer ersten und einer zweiten nacheinander positionierten benachbarten Schienen (3) bildet, wobei der Magnet (6), der ein Magnetfeld mit einer Intensität erzeugt, die eine hohe magnetische Anziehungskraft von mindestens 10 N/cm² ausübt, über die beiden Schienen (3) angeordnet wird, wobei der Schutz (7) und die Isolierung (9) sich über eine Länge erstrecken, die länger ist als der Magnet (6) selbst und mit einer Elektronikplatine versehen ist, die geeignet ist, die Leiter (8) der ersten und zweiten Schiene (3) in Kontakt zu bringen.

7. Magnetisches Befestigungssystem nach einem oder mehreren der vorhergehenden Ansprüche 1 bis 5, **dadurch gekennzeichnet, dass** es ein Kunstoff-Endoberteil (15) aufweist, das an einem Ende einer Schiene (3) anzuordnen ist, wobei das Endoberteil dem Magneten zugeordnet ist, der ein Magnetfeld mit einer Intensität erzeugt, die eine hohe magnetische Anziehungskraft von mindestens 10 N/cm² ausübt, und auf der Rückseite der Schiene (3) angeordnet ist, wobei eine auf der Vorderseite der Schiene (3) angeordnete Isolierung (9) eine Länge aufweist, die länger ist als die des Oberteils selbst, und wobei die metallischen Leiter (8) am proximalen Ende des Oberteils enden und durch eine auf der Vorderseite der Schiene (3) angeordnete Isolierung (9) auf einer Länge abgedeckt sind, die der Länge des Oberteils ähnlich ist.

8. Magnetisches Befestigungssystem nach Anspruch 1 oder einem oder mehreren der Ansprüche 2 bis 7, **dadurch gekennzeichnet, dass**
- die Schiene (3) einen Körper aus elektrisch isolierendem Kunststoffmaterial aufweist, der mit geeignet voneinander beabstandeten Längsschlitzen versehen ist, in denen jeweils ein Draht oder Litzendraht (8) aus elektrisch leitendem Metall aufgenommen ist, wobei der Draht oder Litzendraht auf mehr als 180° seines Querschnitts von den Innenwänden des jeweiligen Schlitzes umgeben ist, um in diesen reibschlüssig gehalten zu werden, so dass derselbe Draht oder Litzendraht (8) für den verbleibenden Querschnitt frei ist und durch einen elektrischen Kontakt erreichbar ist, der dazu ausgebildet ist, den selben Leiter mit einem Stecker oder einer elektrischen oder elektronischen Vorrichtung zu verbinden, die an dem Körper der Schiene befestigt ist,
- wobei der Körper der Schiene (3) monolithisch und mit einem beliebigen mechanisch widerstandsfähigen Kunststoffmaterial ausgebildet ist, mit einem hohen elektrischen Isolationsgrad und einem hohen thermischen Widerstand, und
- wobei die Schlitze zum Halten der Drähte oder Litzen (8) nebeneinander angeordnet sind, und nach dem Umgeben und Halten der Drähte (8) die Schlitze an einer sichtbaren Flachseite des Schienenkörpers offen sind, mit Längsmündungen mit einer Breite, die immer kleiner ist als der Durchmesser der Drähte oder Litzen (8);
- wobei die Tiefe der Schlitze senkrecht zur sichtbaren Seite ist und einen für den Draht (8) ausreichenden Wert aufweist, der in den die Drähte bzw. Litzen (8) umgebenden Schlitzen für mehr als 180° ihres Querschnitts eingegraben und geschützt werden muss, wobei die Drähte oder Litzen (8) durch die Zähigkeit und strukturelle Nichtverformbarkeit des den monolithischen Körper der Schiene selbst bildenden Materials in den Schlitzen gehalten werden, während durch die engen Mündungen dieser Schlitze jeder elektrische Draht bzw. Litzendraht durch die federbelasteten Kontakte von Steckern oder von an dem monolithischen Körper selbst der Schiene (3) angebrachten Vorrichtungen erreicht werden kann.

9. Verfahren zur lösbaren Befestigung mindestens einer elektrifizierten Schiene (3) in einer beliebigen Richtung und/oder Position an einem Regal (1) für Verkaufsstellen, wobei das Verfahren das magnetische Befestigungssystems nach einem der Ansprüche 1 bis 8 verwendet.

## Revendications

1. Système de fixation magnétique comprenant un rail électrifié (3) et un rayonnage métallique, en particulier pour l'électrification d'unités de rayonnages métalliques (1) munies à l'avant d'étiquettes électroniques, d'écrans et/ou d'autres appareils périphériques,
ledit rayonnage (1) comprenant au moins une étagère;
ledit rail (3) comprenant un corps en matière plastique électriquement isolante, muni de fentes longitudinales espacées de façon appropriée les unes par rapport aux autres, dans chacune desquelles un conducteur métallique (8) est logé et peut être atteint par un contact électrique utile pour connecter le même conducteur à une prise ou à un dispositif électrique ou électronique fixé audit corps du rail (3),
ledit rail (3) comprenant en outre des éléments de fixation magnétiques (5, 6) dudit rail au rayonnage métallique, **caractérisé en ce que**
- ledit rail (3) est muni de deux types d'aimants (5, 6) qui génèrent des champs magnétiques d'intensité ou de flux magnétique différent, l'un (5) des deux type d'aimants générant un champ magnétique d'intensité inférieure à l'autre type (6) d'aimants:
- les aimants (5) générant l'intensité magnétique inférieure sont configurés pour distribuer la force magnétique le long de la longueur du rail (3);
- les aimants (6) générant le champ magnétique d'intensité supérieure sont placés aux extrémités dudit rail (3) et sont isolés des conducteurs métalliques (8) du côté du rail (3) opposé au côté qui adhère au rayonnage (1);
- l'aimant (5) générant le champ magnétique d'intensité inférieure ou plus faible exerce sur le rayonnage métallique (1) une force d'attraction inférieure à 1 N/cm2 et les aimants (6) générant un champ magnétique d'intensité supérieure exercent sur le rayonnage métallique (1) une force d'attraction de l'ordre d'au moins 10 N/cm2.

2. Système de fixation magnétique selon la revendication 1, dans lequel l'aimant (5) générant le champ magnétique d'intensité inférieure a une longueur qui est légèrement plus courte que celle du rail (3) lui-même.

3. Système de fixation magnétique selon la revendication 1 ou 2, dans lequel l'aimant (6) générant le champ magnétique d'intensité supérieure a une longueur d'au moins 20 mm.

4. Système de fixation magnétique selon l'une ou plusieurs des revendications 1 à 3, dans lequel l'aimant (6) générant le champ magnétique d'intensité supérieure, positionné à l'arrière du rail (3), est inclus à l'intérieur d'un clip magnétique (13) comprenant sur le côté antérieur du rail (3) un isolant (9), et une protection en matière plastique (7) couvrant les quatre côtés longs du rail (3).

5. Système de fixation magnétique selon l'une ou plusieurs des revendications 1 à 4, dans lequel au moins deux clips magnétiques (13) sont positionnés en correspondance des deux extrémités du rail (3) lui-même, et éventuellement au moins un autre clip magnétique (13) est positionné entre les deux clips magnétiques (13) positionnés en correspondance des deux extrémités du rail.

6. Système de fixation magnétique selon l'une ou plusieurs des revendications précédentes, **caractérisé en ce qu'**il forme un élément de connexion (14) entre un premier et un second rail (3) adjacents positionnés séquentiellement, l'aimant (6) générant un champ magnétique d'une intensité telle que pour exercer une force d'attraction magnétique élevée, d'au moins 10 N/cm2, étant placé sur les deux dits rails (3), dans lequel la protection (7) et l'isolant (9) s'étendent sur une longueur plus longue que l'aimant (6) lui-même, et une carte électronique apte à mettre en contact les conducteurs (8) desdits premier et second rails (3) étant prévue.

7. Système de fixation magnétique selon l'une ou plusieurs des revendications précédentes 1 à 5, **caractérisé en ce qu'**il comprend un bouchon terminal (15) en matière plastique destiné à être placé à une extrémité du rail (3), ledit bouchon terminal étant associé à l'aimant générant un champ magnétique d'une intensité telle que pour exercer une force d'attraction magnétique élevée, d'au moins 10 N/cm2, placé à l'arrière du rail (3) lui-même, un isolant (9) placé sur le côté antérieur du rail (3) ayant une longueur plus longue que celle du bouchon lui-même, et dans lequel les conducteurs métalliques (8) se terminent à l'extrémité proximale du bouchon, et sont couverts, sur une longueur similaire à celle du bouchon, d'un isolant (9) placé sur l'avant du rail (3).

8. Système de fixation magnétique selon la revendication 1 ou l'une ou plusieurs des revendications 2 à 7, **caractérisé en ce que**
- ledit rail (3) comprenant un corps d'une matière plastique électriquement isolante, muni de fentes longitudinales espacées de manière appropriée les unes par rapport aux autres, dans chacune desquelles est logé un fil ou un toron (8) réalisé d'un métal électriquement conducteur, lequel fil ou toron est entouré à plus de 180° de sa section par les parois internes de la fente respective pour y être maintenu par friction, afin que la section restante le fil ou toron (8) soit libre et puisse être atteinte par un contact électrique configuré pour connecter le même conducteur à une prise ou un dispositif électrique ou électronique, fixé audit corps du rail,
- dans lequel le corps du rail (3) lui-même est formé de façon monolithique et de n'importe quelle matière plastique mécaniquement résistante, avec un haut degré d'isolation électrique et une résistance thermale élevée, et
- dans lequel les fentes pour maintenir les fils ou les torons (8) sont positionnées l'une à côté de l'autre, et après avoir entouré et maintenu les fils (8), les fentes sont ouvertes sur un côté visible planaire du corps du rail, avec bouches longitudinales toujours de largeur inférieure au diamètre des fils ou des torons (8);
- la profondeur des fentes étant perpendiculaires audit côté visible et ayant une valeur suffisante pour que le fil (8) soit enterré et protégé dans les fentes entourant les fils ou les torons (8) sur plus de 180° de leur section, les fils ou les torons (8) étant maintenus dans les fentes par la ténacité et la non-déformabilité structurelle du matériau formant le corps monolithique du rail lui-même, tandis qu'à travers les bouches étroites desdites fentes, chaque fil ou toron électrique peut être atteint par les contacts à ressort des prises ou des dispositifs installés sur le corps monolithique lui-même du rail (3) .

9. Méthode de fixation amovible d'au moins un rail (3) électrifié sur un rayonnage (1) pour le point de vente, dans n'importe quelle direction et/ou position, ladite méthode utilisant le système de fixation magnétique selon l'une des revendications 1 à 8.
